(19) Europäisches Patentamt
European Patent Office
Office européen des brevets

(11) **EP 1 785 271 A1**

(12) **EUROPEAN PATENT APPLICATION**
published in accordance with Art. 158(3) EPC

(43) Date of publication:
**16.05.2007 Bulletin 2007/20**

(51) Int Cl.:
*B32B 27/30* (2006.01)  *B32B 7/02* (2006.01)
*B65D 23/00* (2006.01)  *B65D 25/36* (2006.01)
*B65D 65/40* (2006.01)  *G09F 3/04* (2006.01)

(21) Application number: **05768943.2**

(22) Date of filing: **05.08.2005**

(86) International application number:
**PCT/JP2005/014411**

(87) International publication number:
**WO 2006/013967 (09.02.2006 Gazette 2006/06)**

(84) Designated Contracting States:
**DE FR GB PL**

(30) Priority: **06.08.2004  JP 2004231188**

(71) Applicant: **MITSUBISHI PLASTICS, INC.
Chiyoda-ku,
Tokyo 100-0005 (JP)**

(72) Inventors:
• **TANAKA, Yukihiro,
c/o Nagahama Plant
Nagahama-shi,
Shiga 526-8660 (JP)**
• **HIRUMA, Takashi,
c/o Nagahama Plant
Nagahama-shi,
Shiga 526-8660 (JP)**
• **KOBAYASHI, Shuji,
c/o Nagahama Plant
Nagahama-shi,
Shiga 526-8660 (JP)**
• **HAYASHI, Tatsuya,
c/o Nagahama Plant
Nagahama-shi,
Shiga 526-8660 (JP)**

(74) Representative: **Grünecker, Kinkeldey,
Stockmair & Schwanhäusser
Anwaltssozietät
Maximilianstrasse 58
80538 München (DE)**

(54) **MULTILAYER HEAT-SHRINKABLE POLYSTYRENE FILM AND HEAT-SHRINKABLE LABELS AND CONTAINERS MADE BY USING THE SAME**

(57)    Heat shrinkable polystyrene films are provided which are excellent in shrinkage finish properties, low-temperature shrinkability, and resistance to solvents, and have low shrinkage stress, and in which natural shrinkage, a reduction in elongation by printing, and shrinkage due to solvents are suppressed.

The films are laminated films which have at least three layers, and outer layers of the laminated films are made of a predetermined styrene-butadiene block copolymer and an intermediate layer of the laminated films is made of a mixture of a predetermined styrene-butadiene block copolymer and another styrene-butadiene block copolymer and/or a styrene-butadiene-isoprene copolymer. As the laminated films, multilayer heat shrinkable polystyrene films are used which are at least monoaxially stretched. The ratio of thickness of their intermediate layer to the total thickness of the laminated films is from 60% to 85%, and the maximum value of the shrinkage stress at 90°C in the main shrinkage direction is at most 2.5 MPa.

EP 1 785 271 A1

**Description**

TECHNICAL FIELD

This invention relates to a multilayer heat shrinkable polystyrene film which has excellent low-temperature shrinkage properties, is high in elasticity, has excellent natural shrink properties, and is high in resistance to solvents, and which shows good quality balance especially when used as labels, and a heat shrinkable label and a container made of such a film.

BACKGROUND ART

Polyvinyl chloride (PVC) is most popular as a material for heat shrinkable film, which is widely used for shrink wrapping, shrink bundle wrapping, shrink labels for plastic containers, glass container wrapping capable of preventing breakage of the glass container and scattering of broken pieces, cap seals, etc. This is because heat shrinkable films made of PVC relatively widely meet users' requirements including practical characteristics such as mechanical strength, rigidity, optical properties and shrink properties, etc. and cost. But because PVC causes e.g. problems involving disposal thereof, heat shrinkable films made of materials other than PVC are desired.

As films not made of PVC, polyester heat shrinkable films mainly made of polyester resins and polystyrene heat shrinkable films made mainly of copolymers including polystyrene have been proposed and used.

Polyester heat shrinkable films of the abovementioned type have good rigidity at room temperature, i.e. elasticity, is low in the rate of natural shrinkage (i.e. slight shrinkage of film before use at a temperature higher than normal temperature, e.g. in summer), and thus is very high in resistance to natural shrinkage.

As a polystyrene heat shrinkable film, e.g. a heat shrinkable hard film made of a mixture of a styrene-butadiene block copolymer and a styrene-butylacrylate copolymer is disclosed in Patent document 1. Patent document 2 describes a heat shrinkable multilayer film having inner and outer layers which are resin layers containing a styrene-butadiene block copolymer and polystyrene, and an intermediate layer which is a polystyrene resin layer.

Patent documents 3-5 and other documents disclose heat shrinkable multilayer films which have outer layers made of a mixture of a styrene-butadiene block copolymer and polystyrene or styrene-butylacrylate, and an intermediate layer made of a mixture of a styrene-butadiene block copolymer and a styrene-butylacrylate copolymer or a mixture of a styrene-butadiene block copolymer, a styrene-butylacrylate copolymer and a hydrogenated styrene- butadiene block copolymer.

Patent document 1: JP patent publication 61-41544A
Patent document 2: JP patent publication 9-272182A
Patent document 3: JP patent publication 2000-185373A
Patent document 4: JP patent publication 2000-94598A
Patent document 5: JP patent publication 2000-238192A

DISCLOSURE OF THE INVENTION

PROBLEM TO BE SOLVED BY THE INVENTION

However, polyester heat shrinkable films as described above are more likely to develop shrinkage spots and wrinkles during heat shrinkage than heat shrinkable films made of PVC.

Also, the polystyrene heat shrinkable film disclosed in Patent document 1 was unsatisfactory in elongation after printing. The polystyrene heat shrinkable film disclosed in Patent document 2 was insufficient in shrink finish and elongation when GPPS (general purpose polystyrene) was used for the intermediate layer and was practically insufficient in transparency when HIPS (high impact polystyrene) was used.

The polystyrene heat shrinkable films disclosed in Patent Publications 3-5 were not satisfactory in elongation characteristics, particularly elongation after printing as heat shrinkable labels, both in the main shrinkage direction and a direction perpendicular thereto, though they showed slight improvements in resistance to natural shrinkage, low-temperature shrinkability, elasticity, etc. Insufficient elongation in the main shrinkage direction may cause labels to be torn along perforations if articles on which the labels are stuck fall, thereby lowering the product value. Insufficient elongation in the main shrinkage direction and the direction perpendicular thereto causes such practical problems as cutting of labels during e.g. the printing or sleeve-forming step. Further, solvents used during printing or the like may cause shrinkage of the film in the width direction during the steps from the printing to slit-forming steps, thus making it difficult to arrange slits at predetermined intervals after printing.

As polystyrene heat shrinkable films, films mainly made of styrerte-butadiene block copolymer (SBS) are being considered. While this kind of films have better shrink finish properties compared to PVC heat shrinkable films, they have a problem in that if low-temperature shrinkability is imparted thereto, natural shrinkage tend to increase, so that the diameter of a label formed into a sleeve tends to decrease, which makes it difficult to cover a container with such a label.

On the other hand, when e.g. such labels are applied to PET bottles (such use of labels is becoming increasingly popular today), it is required to achieve high-quality shrink finish appearance in a relatively short time and at a relatively low temperature. In addition, it is required that such films be low in natural shrinkage. This is because steam shrinkers are mainly used today in applying labels of shrink film to PET bottles and glass bottles, so that it is necessary to reduce the temperature of such steam shrinkers for gerrn-free filling, to prevent deterioration in quality of the contents due to high temperature, and to permit the use of non-heat-resistant bottles. On the other hand, if low-temperature shrinkability is imparted to meet this requirement, natural shrinkage tends to increase, so that the above problems arise. Thus, both low-temperature shrinkability and resistance to natural shrinkage are required.

For e.g. labeling on PET bottles, heat shrinkable films made of polyethylene terephthalate (PET) (hereinafter referred to as "PET shrink films") are used because they also have mainly low-temperature shrinkability and is low in natural shrinkage. While PET shrink films have good low-temperature shrinkability, they have a problem in shrink finish properties. Therefore, development of SBS films having excellent shrink finish properties is desired.

An object of this invention is to provide a polystyrene heat shrinkable film which has excellent shrink finish properties and low-temperature shrinkability, is low in shrinkage stress, high in resistance to natural shrinkage, low in shrinkage due to solvents used during printing, and low in reduction of elongation after printing, and has excellent quality balance.

Another object of this invention is to provide a label and a container which is formed from the abovementioned polystyrene heat shrinkable film and which have excellent shrink finish properties, low-temperature shrinkability, is low in shrinkage stress, low in natural shrinkage, low in shrinkage due to solvents used during printing, and low in reduction of elongation after printing.

MEANS FOR SOLVING THE PROBLEMS

The present inventors ardently studied the composition and layer configuration of polystyrene resins and have discovered as a result that a film comprising layers made of the predetermined polystyrene resins solve the abovementioned problems, and have completed the present invention.

Specifically, the object of the present invention is achieved by the below-described heat shrinkable polystyrene films.

(1) A multilayer heat shrinkable polystyrene film which is a laminated film having at least three layers including outer layers made of the below component (a), and an intermediate layer made of a mixture containing at least the below component (b1) and containing the below component (b2) and/or component (c), the laminated film being at least monoaxially stretched, the ratio of the thickness of the intermediate layer to the total thickness of the laminated film being at least 60% and at most 85%, and the maximum value of shrinkage stress at 90˚C in the main shrinkage direction being at most 2.4 MPa.

(a) Styrene-butadiene block copolymer having a styrene content of at least 75 mass % and having two peaks of loss elastic modulus (E")
(b1) Styrene-butadiene block copolymer having a styrene content of at least 85 mass % and having one peak of loss elastic modulus (E")
(b2) Styrene-butadiene block copolymer having a butadiene content of more than 25 mass %,
(c) Styrene-butadiene-isoprene block copolymer.

(2) A multilayer heat shrinkable polystyrene film which is a laminated film having at least three layers including outer layers made of a mixture of the below components (a) and (b2), and an intermediate layer made of a mixture containing at least the below component (b1) and containing the below component (b2) and/or component (c), the laminated film being at least monoaxially stretched, the ratio of the thickness of the intermediate layer to the total thickness of the laminated film being at least 60% and at most 85%, and the maximum value of shrinkage stress at 90˚C in the main shrinkage direction being at most 2.5 MPa,

(a) Styrene-butadiene block copolymer having a styrene content of at least 75 mass % and having two peaks of loss elastic modulus (E"),

(b1) Styrene-butadiene block copolymer having a styrene content of at least 85 mass % and having one peak of loss elastic modulus (E"),
(b2) Styrene-butadiene block copolymer having a butadiene content of more than 25 mass %,

(c) Styrene-butadiene-isoprene block copolymer.

(3) The multilayer heat shrinkable polystyrene film described in item (2) wherein the mass ratio (a)/(b2) between components (a) and (b2) in the mixture forming the outer layers is 70-90/ 30-10.

(4) The multilayer heat shrinkable polystyrene film described in any of items (1) to (3) wherein the mass ratio (b1)/ (b2) between components (b1) and (b2) in the mixture forming the intermediate layer is 30-80/70-20, or the mass ratio (b1)/(c) between components (b1) and (c) is 30-80/70-20.

(5) The multilayer heat shrinkable polystyrene film described in any of items (1) to (4) wherein component (a) is a copolymer which has a styrene content of at least 75 mass %, and a storage elastic modulus (E') at 40°C of at least $1.00 \times 10^9$ Pa and at most $2.30 \times 10^9$ Pa, and in which one peak of loss elastic modulus (E") exists in the range of 55°C to 80°C and another peak of loss elastic modulus (E") exists in the range of -100°C to -30°C.

(6) The multilayer heat shrinkable polystyrene film described in any of items (1) to (5) wherein component (b1) is a styrene-butadiene block copolymer which has a storage elastic modulus (E') at 0°C of at least $2.00 \times 10^9$ Pa and a storage elastic modulus (E') at 40°C of at least $1.50 \times 10^9$ Pa, and has one peak of loss elastic modulus (E") existing in the range of 40°C to 60°C.

(7) The multilayer heat shrinkable polystyrene film described in any of items (1) to (6) wherein component (b2) is a styrene-butadiene block copolymer which has a storage elastic modulus (E') at 0°C of at most $1.00 \times 10^9$ Pa, and has at least one peak of loss elastic modulus (E") existing in the range of -100°C to -30°C.

(8) The multilayer heat shrinkable polystyrene film described in any of items (1) to (7) wherein component (c) is a styrene-butadiene-isoprene copolymer which has a butadiene content of at least 10 mass % and an isoprene content of at least 8 mass %, has a storage elastic modulus (E') at 0°C of at most $1.00 \times 10^9$ Pa, and has at least one peak of loss elastic modulus (E") existing in the range of -100°C to -30°C.

(9) The multilayer heat shrinkable polystyrene film described in any of items (1) to (6) wherein component (b2) is a styrene-butadiene block copolymer which has a storage elastic modulus (E') at 0°C of at most $1.00 \times 10^9$ Pa and at least one peak of loss elastic modulus (E") existing in the range of -100°C to -30°C, and component (c) is a styrene-butadiene-isoprene copolymer which has a butadiene content of at least 10 mass % and an isoprene content of at least 8 mass %, and a storage elastic modulus (E') at 0°C of at most $1.00 \times 10^9$ Pa, and at least one peak of loss elastic modulus (E") existing in the range of -100°C to -30°C, and wherein the intermediate layer is made of a mixture of components (b1), (b2) and (c).

(10) The multilayer heat shrinkable polystyrene film described in item (9) wherein the mass ratio (b1)/{(b2) + (c)}, i.e. the mass ratio of component (b1) to components (b2) and (c) is 30-80/70-20.

(11) The multilayer heat shrinkable polystyrene film described in any of items (1) to (7) wherein the intermediate layer is made of a mixture of components (b1) and (b2).

(12) The multilayer heat shrinkable polystyrene film described in any of items (1) to (11) wherein the heat shrinkage rate in the main shrinkage direction when immersed in hot water at 80˚C for 10 seconds is at least 30%.

The other object of the present invention is achieved by heat shrinkable labels formed of the multilayer heat shrinkable polystyrene films described in any of items (1) to (12), and containers formed of such heat shrinkable labels.

ADVANTAGES OF THE INVENTION

According to the present invention, because a laminated film is used which includes layers of predetermined styrene copolymers, heat shrinkable polystyrene films are provided which have excellent shrinkage finish properties, low-temperature shrinkability, is low in shrinkage stress, high in elasticity, low in natural shrinkage, low in shrinkage due to solvents used during printing, and low in the reduction of shrinkage after printing.

BEST MODES FOR EMBODYING THE INVENTION

Now the invention is described in more detail.
The multilayer heat shrinkable polystyrene film according to this invention is a laminated film having at least three layers.
The outer layers of the laminated film is made of a styrene-butadiene block copolymer (hereinafter referred to as component (a)), or made of component (a) and a styrene-butadiene block copolymer having a butadiene content of more than 25 mass % (hereinafter component (b2)). The styrene butadiene block copolymer forming the outer layers is a copolymer using styrene and butadiene as monomers.
The content of styrene forming the styrene-butadiene block copolymer, i.e. component (a) is preferably at least 75 mass %, more preferably at least 78 mass %, relative to the total amount of the monomers forming the styrene-butadiene block copolymer. If the styrene content is at least 75 mass %, it is possible to impart sufficient shrinkage properties and sufficient elasticity to the film. The upper limit of the styrene content is preferably 90 mass %, more preferably 86 mass %. If the styrene content is at most 90 mass %, the film shows improved elasticity and elongation.
Also, the storage elastic modulus (E') at 25˚C of component (a) is at least $1.30 \times 10^9$ Pa, preferably at least $1.50 \times 10^9$ Pa, and at most $2.50 \times 10^9$ Pa, preferably at most $2.30 \times 10^9$ Pa. Further, the storage elastic modulus (E') at 40˚C of component (a) is at least $1.00 \times 10^9$ Pa, preferably at least $1.30 \times 10^9$ Pa, and at most $2.30 \times 10^9$ Pa, preferably at most $2.10 \times 10^9$ Pa. If the storage elastic modulus (E') is at least $1.30 \times 10^9$ Pa at 25˚C and at least $1.00 \times 10^9$ Pa at 40˚C, it is possible to ensure elasticity of the film in the normal temperature range and suppress natural shrinkage. On the other hand, if the storage elastic modulus (E') is at most $2.50 \times 10^9$ Pa at 25˚C and at most $2.30 \times 10^9$ Pa at 40˚C, it is possible to ensure elasticity of the film and keep low shrinkage stress, thereby keeping good shrinkage finish properties, even if the film is stretched to increase the shrinkage rate in the low-temperature range. That is, if the storage elastic modulus (E') is over the above-mentioned ranges at 25˚C and 40˚C, although it is possible to improve the elasticity of the film, the shrinkage stress might increase if the film is stretched to increase the shrinkage rate in the low-temperature range, thereby aggravating shrinkage finish properties.
Also, the fact that the laminated film obtained has some degree of elasticity contributes to improved shrinkage finish properties. This is because when the heat shrinkable film is printed, formed into a bag shape and put on a bottle, it is pushed mechanically and may be bent if it does not have elasticity of a predetermined level or over, so that wrinkles may be formed after shrinkage. Therefore, component (a) preferably has a storage elastic modulus (E') in the above-mentioned range.
Further, for peaks of the loss elastic modulus (E") of component (a), one such peak preferably exists in the range from 55˚C to 80˚C, preferably from 60˚C to 80˚C and another peak exists in the range of -100˚C to -30˚C, preferably from -100˚C to -50˚C. If one peak of the loss elastic modulus (E") exists in the range of 55˚C to 80˚C, that is, if one such peak exists at a temperature at most 80˚C, it is possible to ensure a sufficiently high shrinkage rate in the low-temperature range. Thus, even if the film is stretched, the shrinkage stress of the film is kept low, so that the film is less likely to be torn. Also, if the peak exists at a temperature at least 55˚C, it is possible to suppress natural shrinkage while maintaining a sufficiently high shrinkage rate in the low-temperature range. If component (a) has another peak of the loss elastic modulus (E") in the range of -100°C to -30°C, that is, if the peak exists at a temperature at most -30°C, elongation of the film will be sufficient. Due to the characteristics of the styrene-butadiene block copolymer, the other peak will never exist at a temperature of -100°C or lower.

The storage elastic modulus (E') and the loss elastic modulus (E") can be measured by use of a viscoelasticity spectrometer.

Further, the weight-average molecular weight (Mw) of component (a) is at least 50000, preferably at least 80000 and at most 250000, preferably at most 220000. If the Mw value of component (a) is at least 50000, the elongation of the laminated film will be sufficient. On the other hand, if the Mw value is at most 250000, it is possible to suppress an increase in shrinkage stress.

If component (b2) used in the intermediate layer is mixed with component (a) as a material for the outer layers of the film of this invention, a styrene-butadiene block copolymer having a butadiene content of more than 25 mass %, which will be described later, can be used advantageously as component (b2).

If component (b2) used in the intermediate layer is mixed with component (a) as a material for the outer layers of the film of this invention, the mixing ratio (a)/(b2) in mass, i.e. the mixing ratio in mass of component (a) to component (b2) is preferably 70-90/30-10, more preferably 75-85/25-15. If component (b2) used in the intermediate layer is mixed with component (a) used in the outer layers, it is possible to further improve the resistance to solvents of the film, thereby suppressing formation of solvent cracks, and suppressing a reduction in elongation after printing. This in turn suppresses rupture of the film during the printing step, and also suppresses rupture of the film when formed into a bag, as well as rupture of a label formed from the film when the label is applied to a PET bottle.

If the content of component (b2) is at least 10 mass %, good resistance to solvent would be imparted to the film obtained. Also, if it is at most 30 mass %, the transparency of the film obtained and its elasticity can be assured.

The intermediate layer of the laminated film is made of a mixture containing at least the below-described component (b1) and containing the below-described component (b2) and/or component (c). As components (b1), (b2) and (c), copolymers having desired characteristics can be selected from among various copolymers having different copolymerization composition ratios, block structures, molecular weights, etc.

Component (b1) is a styrene-butadiene block copolymer which has a styrene content of at least 85 mass % relative to the total amount of monomers forming the styrene-butadiene block copolymer and has one peak of the loss elastic modulus (E"). Component (b1) preferably has a storage elastic modulus (E') at 0°C of at least $2.00 \times 10^9$ Pa and a storage elastic modulus (E') at 40°C of at least $1.50 \times 10^9$ Pa and has one peak of loss elastic modulus (E") only in the temperature range of 40°C to 60°C.

Component (b1) imparts elasticity to the film obtained because its styrene content is at least 85 mass %. Also, the styrene content is more preferably at least 88 mass %. On the other hand, the upper limit of the styrene content is preferably 94 mass %, more preferably 92 mass %. If the styrene content is at most 94 mass %, the shrinkage rate in the low-temperature range is assured and, if the film is stretched, it is possible to suppress an increase in shrinkage stress and natural shrinkage, and suppress rupture of the film. In this regard, the styrene content of styrene is more preferably at least 88 mass % and at most 92 mass %.

If the storage elastic modulus (E') at 0°C of component (b1) is at least $2.00 \times 10^9$ Pa, preferably at least $2.30 \times 10^9$ Pa, elasticity at normal temperature can be maintained and an increase in natural shrinkage is suppressed. The upper limit of the storage elastic modulus (E') at 0°C of component (b1) is preferably $4.00 \times 10^9$ Pa, more preferably $3.60 \times 10^9$ Pa. If the storage elastic modulus (E') is at most $4.00 \times 10^9$ Pa, natural shrinkage is suppressed while maintaining elasticity, and elongation is maintained too.

Also, if the storage elastic modulus (E') at 25°C of component (b1) is at least $1.80 \times 10^9$ Pa, preferably at least $2.00 \times 10^9$ Pa, elasticity at normal temperature can be maintained and an increase in natural shrinkage is suppressed. On the other hand, the upper limit of the storage elastic modulus (E') at 25°C of component (b1) is preferably $4.00 \times 10^9$ Pa, more preferably $3.40 \times 10^9$ Pa, though it depends on component (b2) or (c) mixed.

Also, if the storage elastic modulus (E') at 40°C of component (b1) is at least $1.50 \times 10^9$ Pa, preferably at least $1.80 \times 10^9$ Pa, elasticity at normal temperature can be maintained and an increase in natural shrinkage is suppressed. On the other hand, the upper limit of the storage elastic modulus (E') at 40°C of component (b1) is preferably $3.40 \times 10^9$ Pa, more preferably $3.20 \times 10^9$ Pa, though it depends on component (b2) or (c) mixed.

In order to further suppress shrinkage stress, the storage elastic modulus (E') at 50°C of component (b1) is preferably at most $2.00 \times 10^9$ Pa.

One peak of the loss elastic modulus (E") of component (b1) exists in the range of 40°C to 60°C. If the peak of the loss elastic modulus (E") exists above 40°C, the shrinkage rate in the low-temperature range and elasticity at normal temperature are ensured and natural shrinkage is suppressed. Further, if the peak exists below 60°C, both the elasticity and the shrinkage rate in the low-temperature range are ensured, and if the film is stretched, it is possible to suppress an increase in shrinkage stress and natural shrinkage, and to suppress rupture of the film during stretching. In this regard, the peak of the loss elastic modulus (E") preferably exists in the range of 42°C to 58°C.

Component (b2) is a styrene-butadiene block copolymer which has a butadiene content of more than 25 mass % relative to the total amount of monomers forming the styrene-butadiene block copolymer. Component (b2) preferably has a storage elastic modulus (E') at 0˚C of at most $1.00 \times 10^9$ Pa and has at least one peak of loss elastic modulus (E") in the range of -100˚C to -30˚C.

If the butadiene content of component (b2) is at most 25 mass %, the elongation of the film may be insufficient. Also, the butadiene content of component (b2) is more preferably at least 27 mass %. On the other hand, the upper limit of the butadiene content is preferably 40 mass % and more preferably 35 mass %. If the butadiene content is less than 40 mass %, elasticity of the film is ensured and the formation of crosslinked substances is suppressed.

If the storage elastic modulus (E') at 0˚C of component (b2) is at most $1.00 \times 10^9$ Pa, preferably at most $0.80 \times 10^9$ Pa, the elongation of the film is sufficient. On the other hand, the lower limit of the storage elastic modulus (E') at 0˚C of component (b2) is preferably $0.8 \times 10^9$ Pa, more preferably $1.0 \times 10^9$ Pa, though it depends on components (b1) and (c) mixed.

Also, the storage elastic modulus (E') at 25˚C of component (b2) is at most $1.00 \times 10^9$ Pa, preferably at most $0.8 \times 10^9$ Pa. If it is at most $1.00 \times 10^9$ Pa, the elongation of the film is sufficient, and smooth shrinkage finish is obtained.

Also, the storage elastic modulus (E') at 40˚C of component (b2) is preferably at least $0.70 \times 10^8$ Pa and at most $0.70 \times 10^9$ Pa. If it is within this range, the elongation of the film is sufficient and smooth shrinkage finish is obtained.

If at least one peak of the loss elastic modulus (E") of component (b2) exists in the range of -100˚C to -30˚C, particularly if the peak is positioned below -30˚C, the elongation of the film is sufficient. More preferably, at least one peak of the loss elastic modulus (E") exists in the range of -100˚C to -35˚C. Due to the characteristics of the styrene-butadiene block copolymer, the other peak could never exist below -100˚C.

Component (c) is a styrene-butadiene-isoprene block copolymer and the contents of styrene, butadiene and isoprene may be suitably determined according to the content of component (b1) mixed. Preferably, the content of butadiene is at least 10 mass % and the content of isoprene is at least 8 mass % relative to the total amount of the monomers forming the styrene-butadiene-isoprene block copolymer. Further, component (c) is preferably a styrene-butadiene-isoprene block copolymer which has a storage elastic modulus (E') at 0˚C of at most $1.00 \times 10^9$ Pa and has at least one peak of the loss elastic modulus (E") in the range of -100˚C to -30˚C.

If the butadiene content of component (c) is at least 10 mass %, the film has sufficient elongation. The butadiene content of component (c) is more preferably at least 13 mass %. On the other hand, the upper limit of the butadiene content is preferably 30 mass % and more preferably 25 mass %. If the butadiene content is at most 30 mass %, the film has good elasticity.

If the isoprene content of component (c) is at least 8 mass %, the elongation of the film is sufficient. The isoprene content of component (c) is more preferably at least 10 mass %. On the other hand, the upper limit of the isoprene content is preferably 30 mass % and more preferably 25 mass %. If the isoprene content is at most 30 mass %, the elasticity of the film is sufficient.

Because component (c) has a storage elastic modulus (E') at 0˚C of at most $1.00 \times 10^9$ Pa, the film has good elongation. The storage elastic modulus (E') at 0˚C of component (c) is more preferably at most $0.80 \times 10^9$.

Because at least one peak of the loss elastic modulus (E") of component (c) exists in the range of -100˚C to -30˚C, particularly because the peak is positioned below -30˚C, the elongation of the film is sufficient. More preferably, at least one peak of the loss elastic modulus (E") of component (c) exists in the range of -100˚C to -35˚C. Due to the characteristics of the styrene-butadiene-isoprene block copolymer, the other peak could never exist below -100˚C.

The ranges of the storage elastic modulus values (E') of components (b1), (b2) and (c) depend on the compositions of the copolymers of the respective components, and will be values between the storage elastic modulus (E') of the homopolymer of one monomer forming such copolymers and the storage elastic modulus (E') of the homopolymers of other monomers. Therefore, the combination of monomers forming the copolymers automatically determines the upper and lower limits of the storage elastic modulus (E'). Thus, as for the ranges of the storage elastic modulus (E') of the (b1), (b2) and (c) components, when one limit decides, the other limit and range will decide by themselves.

The styrene copolymers forming components (a) to (c) of the films according to the present invention may be commercially available styrene copolymers. Also, they may be prepared by introducing butadiene or isoprene in the process of polymerizing styrene copolymers. If the styrene copolymers are prepared by polymerization, the method of polymerization is not limited and may be any well-known conventional method such as emulsion polymerization, block polymerization, solution polymerization, suspension polymerization, or multi-stage polymerization such as block-suspension two-stage polymerization. In this process, polymerization initiators, molecular weight adjusting agents, or other additives (such as antioxidants, ultraviolet absorbers, flame retardants, antistatic agents, mold release agents, plasticizers, dyes, pigments, and fillers) may be optionally added.

The molecular weight adjusting agents include mercaptans such as $\alpha$-methylstyrene dimer, n-dodecylmercaptan, t-dodecylmercaptan, 1-phenylbutene-2-fluorene, dipentene and chloroform, terpenes, and halogen compounds.

Also, optionally added polymerization initiators may be organic peroxides including peroxyketals such as 1,1-bis(t-butylperoxy) cyclohexane, and 1,1-bis(t-butylperoxy) 3,3,5-trimethylcyclohexane, dialkylperoxides such as dicumyl peroxide, di-t-butylperoxide, and 2,5-dimethyl-2,5-di(t-butylperoxy) hexane, diaryl-peroxides such as benzoyl peroxide and m-toluoyl peroxide, peroxydicarbonates such as dimyristyl peroxydicarbonate, peroxyesters such as t-butylperoxyisopropyl carbonate, ketone peroxides such as cyclohexanone peroxide, and hydroperoxides such as p-methahydroperoxide.

The additives include lubricants such as stearic acid, behenic acid, zinc stearate, calcium stearate, magnesium stearate and ethylenebisstearoamide, and antioxidants such as organic polysiloxane, mineral oil, hindered phenol antioxidants such as 2,6-di-t-butyl-4-methylphenol, stearyl-β-(3,5-di-t-butyl-4-hydroxyphenyl) propionate and triethylene glycol-bis-3-(3-t-butyl-4-hydroxy-5-methyl- phenyl) propionate, and phosphorus antioxidants such as tri (2,4-di-t- butylphenyl) phosphite, and 4,4'-butylidenebis (3-methyl-6-t-butylphenyl- di-tridecyl) phosphite.

The mixture forming the intermediate layer may be a mixture of components (b1) and (b2), a mixture of components (b1) and (c), or a mixture of components (b1), (b2) and (c).

If a mixture of components (b1) and (b2) is used, the mixing ratio (in mass) of component (b1) to component (b2), i.e. (b1)/(b2) is preferably 30-80/70-20, more preferably 35-75/65-25. If the content of component (b1) is at least 30 mass %, the shrinkage rate and elasticity of the laminated film obtained will be sufficient. If it is at most 80 mass %, the elongation of the laminated film obtained, as well as both its shrinkage rate and elasticity, will be sufficient.

Also, if a mixture of components (b1) and (c) is used, the mixing ratio (in mass) component (b1) to component (c), i.e. (b1)/(c) is preferably 30-80/70-20, more preferably 35-75/65-25. If the content of component (b1) is at least 30 mass %, sufficient shrinkage rate and elasticity will be imparted to the laminated film obtained. If it is at most 80 mass %, both shrinkage rate and elasticity will be imparted to the laminated film obtained and sufficient elongation will be assured.

Also, if a mixture of components (b1), (b2) and (c) is used, the mixing ratio by mass of component (b1) to the other components, i.e. (b1)/{(b2) + (c)) is preferably 30-80/70-20, more preferably 35-75/65-25. The mixing ratio of component (b2) to component (c) may be determined to any value provided the total content of components (b2) and (c) is in the range of 30 mass % to 80 mass %. For example, the mixing ratio by mass of component (b2) to component (c), i.e. (b2)/(c) is preferably 0-100/100-0, more preferably 5-95/95-5.

Also, the fact that the laminated film obtained has some degree of elasticity contributes to improved shrinkage finish properties. This is because when the heat shrinkable film is printed, formed into a bag shape and put on a bottle, it is pushed mechanically and may be bent if it does not have elasticity of a predetermined level or over, so that wrinkles may be formed after shrinkage. Also, if heat stability is required for the film, the film preferably contains component (c) in addition to component (b2). Therefore, in order to improve elasticity and elongation, the intermediate layer is made of a mixture of components (b1) and (b2), and in order to further the intermediate layer is preferably made of a mixture of components (b1), (b2) and (c).

Instead of the single intermediate layer, the films according to the present invention may include two or more of such intermediate layers. If a plurality of intermediate layers is provided, all the resins forming these layers have to meet the above-mentioned requirements for the resins forming the intermediate layer.

Also, the outer layers and the intermediate layer of the films according to this invention may contain other resins or additives such as heat stabilizers, antioxidants, ultraviolet absorbers, organic lubricants, antistatic agents, nucleating agents, flame retardants, coloring agents, etc. so long as they do not impair the characteristics of the films. But if other resins are added, in order to maintain transparency, it is preferable to select a resin which has as similar a refractive index as possible or a resin which does not markedly decrease the transparency (mainly polystyrene resins such as polystyrene, styrene-butadiene elastomer, styrene-acrylic ester copolymer, styrene-acrylonitrile copolymer, hydrogenated styrene-butadiene copolymer, etc.).

The laminated film according to the present invention can be manufactured by extruding the mixture of the abovementioned resins by means of a single-screw extruder or a double-screw (unidirectional or bidirectional) extruder. For extrusion, a conventional method such as T-die method, tubular method, etc. may be used. The melt-extruded resins are cooled by cooling rolls, air, water, etc., reheated by hot air, hot water, infrared ray or any other suitable method, and monoaxially or biaxially stretched by a roll method, tenter method, tubular method, etc.

The stretching temperature is controlled in the range of about 60˚C to 130˚C, preferably 80˚C to 120˚C, though it is necessary to adjust the temperature according to the softening temperatures of the resins forming the film and the intended use of the film obtained.

In the stretching treatment, the stretching magnification in the main shrinkage direction (transverse direction (TD) perpendicular to the lengthwise direction of the film) and the transverse direction (TD) are suitably determined within the range of 2 to 7 times two to double to 7 times according to the structure and composition of the film, stretching means, stretching temperature, and the form of the end product obtained. Also, whether to stretch the film monoaxially or biaxially is determined according to the intended use of the end product.

More particularly, it is preferable to melt the materials by means of an extruder such as a T-die so that the intermediate layer has a desired composition, and cool the molten materials extruded from the T-die by means of casting rolls to obtain an unstretched film having a thickness of 200 μm to 400 μm.

And the unstretched film is stretched in a flow direction (MD) at 80˚C to 100˚C to a magnification of 1.0 to 1.5 and then stretched in the transverse direction (TD) to a magnification of 4 to 7 times to obtain a film having a thickness of about 40 $\mu$m to 60 $\mu$m. The stretching temperature is preferably set so that the heat shrinkage rate when immersed in hot water of 80°C for 10 seconds is at least 30%, preferably at least 35%, and at most 55%, preferably at most 50%.

Further, in order to impart and maintain heat shrinkability, it is important that the laminated film obtained be cooled rapidly after being stretched before the molecular orientation of the film is relaxed.

The ratio of the thickness of the intermediate layer of the laminated film obtained to the total thickness of the film is at least 60%, more preferably at least 70%, and at most 85%, more preferably at most 80%. If this thickness ratio is at least 60%, the elongation of the film will be sufficient. If it is at most 85%, shrinkage stress and natural shrinkage can be kept low. If the thickness of the intermediate layer is 60%, it corresponds to the outer layer/intermediate layer/outer layer ratio of 1/3/1. If the thickness of the intermediate layer is 85%, the outer layer/intermediate layer/outer layer ratio is 1/11/1.

The heat shrinkage rate of the laminated film obtained in the main shrinkage direction (TD) when immersed in hot water of 80°C for 10 seconds is at least 30%, preferably at least 40%. If it is at least 30%, good shrinkability is obtained in the low-temperature range, so that satisfactory shrinkage finish properties will be obtained. Also, if the temperature in the shrinkage process is increased to achieve satisfactory shrinkage finish properties with such a heat shrinkable film, problems would arise if the container contains a substance which should not be heated, such as tea, dairy products, etc. Also, this would make it necessary to use an expensive heat-resistant bottle instead of a less expensive non-heat-resistant bottle. Because heat shrinkage does not exceed a value before stretching of the laminated film, the upper limit of heat shrinkage rate is the rate before stretching of the film. This value is preferably 55%, more preferably 50% to keep low natural shrinkage.

The maximum value of shrinkage stress of the laminated film at 90°C in the main shrinkage direction (TD) is at most 2.4 MPa, preferably at most 2.2 MPa. If the outer layers are made of component (a), and is at most 2.5 MPa, preferably at most 2.4 MPa if the outer layers are made of a mixture of components (a) and (b2). If the maximum value is above this upper limit, shrinkage tends to be uneven due to high shrinkage stress, so that the film might e.g. wrinkle and satisfactory shrinkage finish properties would not be obtained, though defective shrinkage due to insufficient shrinkage will not occur. Also, perforations provided for easy removal of the label from the PET bottle tend to open excessively, thus impairing the appearance.

Also, the tensile elongation percentage of the laminated film obtained at 23°C in the main shrinkage direction is preferably at least 70%, more preferably at least 80%, further preferably at least 90%. If it is at least 70%, and if the film is used as a label to be applied to a PET bottle or the like, it is possible to reduce the possibility of rupture of the label along the perforations. Also, if a tearing force is applied to a fold line in forming a sleeve, it is possible to reduce the possibility of rupture along the fold line.

Further, the tensile elongation rate of the laminated film obtained at 0°C in the direction perpendicular to the main shrinkage direction is preferably at least 100%, more preferably at least 150%. If this rate is at least 100%, rupture of the film will be suppressed even if a tensile force is applied in the flow direction during e.g. printing in a low-temperature environment or during e.g. the formation of a sleeve after printing. The upper limits of the tensile elongation percentage in both the main shrinkage direction and the direction perpendicular thereto are the rates at which the film is torn.

Also, in order to reduce natural shrinkage (i.e. to increase the resistance to natural shrinkage), the shrinkage rate of the film after the film has been left in a 30°C environment for 30 days is preferably at most 2.0%, more preferably at most 1.5%. If this shrinkage rate is at most 2.0%, shrinkage due to solvents decreases.

Today, labels on PET bottles are increasingly used for advertisements, so that patterns printed on such labels are becoming increasingly complicated and the number of colors used is correspondingly increasing, thus increasing the number of times the labels are exposed to solvents. This in turn increases the possibility of the films being shrunk after printing. It is therefore required that films not shrink even under such severe printing conditions. More specifically, the shrinkage rate of the laminated film after the film has been printed; i.e. exposed to solvents and then left for a predetermined time period is preferably at most 0.45%, more preferably at most 0.4%. If it is at most 0.45%, the printed film can be slitted to predetermined widths.

Because the multilayer heat shrinkable polystyrene films according to the present invention are excellent in low-temperature shrinkability, elasticity, resistance to natural shrinkage and resistance to solvents, they can be used for various formed products including, but not limited to, bottles (blow bottles), trays, lunch boxes, food containers, dairy product containers, etc. by laminating a printed layer, vapor deposited layer or any other functional layer. If the films of this invention are used as heat shrinkable labels for food containers (such as PET bottles for soft drinks or food, glass bottles, preferably PET bottles), they fit tightly on any complicated shape (such as a column with a constricted center, or a pillar having a square, pentagonal or hexagonal angular section) to obtain containers having e.g. wrinkle- or pockmark-free beautiful labels thereon. The formed products and containers of this invention can be manufactured using ordinary forming methods.

Because the films according to the present invention have excellent low-temperature shrinkability, resistance to natural shrinkage and resistance to solvents, they can be advantageously used as heat shrinkable label material not only for plastic formed products which may be deformed when heated to high temperature, but also as heat shrinkable label material for wrapping containers made of at least one material which is extremely different in thermal expansion rate, water absorptive capacity, etc. from the heat shrinkable film of this invention, and which may be selected from metal, porcelain, glass, paper, polyolefin resins such as polyethylene, polypropylene, polybutene, etc., polymethacrylate ester resins, polycarbonate resins, polyester resins such as polyethylene terephthalate, polybutylene terephthalate, etc., and polyamide resins.

Materials of plastic wrappings for which the films of this invention can be used include, in addition to the abovementioned resins, polystyrene, rubber modified high impact polystyrene (HIPS), styrene-butylacrylate copolymer, styrene-acrylonitrile copolymer, styrene-maleic anhydride copolymer, acrylonitrile-butadiene-styrene copolymer (ABS), (meta) acrylate-butadiene-styrene copolymer (MBS), polyvinylchloride resin, phenolic resin, urea resin, melamine resin, epoxy resin, unsaturated polyester resin, silicon resin, etc. Such plastic wrapping may be made of a mixture of two or more of these resins or may be a laminate of layers of these resins.

EXAMPLES

Examples are now described. They do not limit the present invention in any way. The measured values indicated in Examples were obtained and evaluated as follows. In the overall evaluation, A is given for any Example in which all evaluation items are indicated by the symbol ○, B is given for any Example in which at least one evaluation item is indicated by △, but none is indicated by the symbol ×, and C is given for any Example in which at least one of the evaluation items is indicated by the symbol ×.

[Heat shrinkage rate]

The films were cut to strips having a width of 40 mm and a length of 200 mm, and the amount of shrinkage in the main shrinkage direction (TD) was measured after the films were immersed in a hot water bath of 80°C for 10 seconds. The amount of heat shrinkage shown is the ratio (in percentage) of the amount of shrinkage to the original size before shrinkage.

[Natural shrinkage rate]

The films were scored to lengths of 1000 mm in the main shrinkage direction (TD) and left for 30 days in a thermostat bath of 30°C. Thereafter, the distance A (in mm) between the scored lines was measured and the natural shrinkage rate (%) was calculated using the following equation:

$$\textbf{Natural shrinkage rate (\%) = (1000} - \textbf{A)/1000 x 100}$$

[Elasticity]

The tensile modulus of the films in the machine direction (MD) was measured as elasticity of the films.
To measure the tensile modulus, a specimen having a length (MD) of 350 mm and a width of 5 mm was cut from each film, and set on a tensile tester (IM-20 made by INTESCO Co., Ltd.) installed in a thermostatic chamber of 23°C with a chuck distance of 300 mm. With the tester, a stress-strain curve was drawn at the tensile test speed of 5 mm/min, and the tensile modulus was determined using the following equation by use of a straight portion immediately after the start of the test.
Tensile modulus = Stress difference due to original average sectional area between two points on a straight line/strain difference between the same two points

[Tensile elongation rate]

Specimens having a length of 100 mm and a width of 15 mm were cut from each film and set on a tensile tester with a thermostat bath (201X made by INTESCO Co., Ltd.) with a chuck distance of 40 mm. Each specimen was pulled at a test speed of 200 mm/min at 23°C and 100 mm/min at 0°C, and the tensile elongation rate was calculated using the following equation. The elongation rate in the transverse direction (TD) was measured at 23°C and the elongation rate in the machine direction (MD) was measured at 0°C.

$$\text{Tensile elongation rate (\%)} = \{(\text{Distance between chucks at break} - 40 \text{ mm})/40 \text{ mm}\} \times 100$$

The tensile elongation rate was evaluated as follows:
<TD tensile elongation rate>

⚪: At least 150%
Δ: At least 100% but less than 150%
✕: Less than 100%

<MD tensile elongation rate>

⚪: At least 80%
Δ: At least 70% but less than 80%
✕: Less than 70%

[Measurement of storage elastic modulus and loss elastic modulus]

They were measured using a viscoelasticity spectrometer DVA-200 (made by IT Keisoku Co., Ltd.) at a vibration frequency of 10 Hz, temperature increasing speed of 3˚C /min, and measuring temperature of -120˚C to 120˚C. For test specimens, resins to be tested were hot-pressed to plates with a thickness of about 1 mm with no orientation.

[Measurement of shrinkage stress]

The shrinkage stress was measured using a heat shrinkage stress meter made by Yasuda Seiki Seisakusho, Ltd. Each film was cut to a width of 10 mm in the transverse direction (TD) and to a length of 70 mm, and each of the thus cut specimens was fixed on a load cell with no slackness with a chuck distance of 50 mm. The specimen was then immersed in a silicon bath of 90˚C $\pm$ 0.5˚C and the initial shrinkage stress was measured as the maximum shrinkage stress. Also, the shrinkage stress was calculated using the following equation.

$$\text{Shrinkage stress (MPa)} = \text{Load (N) applied to load cell/sectional area (mm}^2) \text{ of the specimen}$$

The shrinkage stress was evaluated as follows:

⚪: At most 2.5 MPa
Δ: Over 2.5 MPa but at most 3.0 MPa
✕: Over 3.0 MPa

Each film was formed into a sleeve and put on a body portion of a 500 ml PET bottle using a steam shrinker having three zones. The shrinkage finish properties was evaluated as follows:

⚪: Finished beautifully with no wrinkles.
Δ: Shrinkage was sufficient but slight wrinkles were observed which deteriorated the appearance.
✕: Wrinkled were observed and perforations widened excessively, thus deteriorating the appearance.

[Solvent cracks]

Each film was cut to strips having a width of 15 mm and a length of 200 mm. One end of each strip was fixed and an 800 gram weight was hung from the other end. To the strips, 3 $\mu$l of a mixture of solvents comprising isopropyl alcohol and ethyl acetate at a ratio of 8/2 was dripped using a microsyringe, and one minute later, the strips were visually checked for cracks. Specifically, the number of cracks on each five specimens (strips) was counted.

[Preparing copolymers A-H]

(Preparing copolymer A)

A styrene-butadiene block copolymer (copolymer A) was prepared by solution polymerization by dissolving a polymer block mainly containing butadiene and a styrene copolymer block in n-hexane or cyclohexane at the rates shown in Table 1. The physical properties of the copolymer A obtained are shown in Table 1.

[Preparing copolymers B-H]

Copolymers B to H were each prepared by mixing a polymer block mainly containing butadiene or isoprene, a styrene copolymer block, and/or butyl acrylate at the rates (mass %) shown in Table 1 and polymerizing by solution polymerization. The physical properties of the copolymers obtained are shown in Table 1.

[Table 1]

| Copolymer | | A | B | C | D | E | F | G | H |
|---|---|---|---|---|---|---|---|---|---|
| Composition *1 | St (mass %) | 82.0 | 90.3 | 91.7 | 94.0 | 70.0 | 70.0 | 83.0 | 90.0 |
| | Bd (mass %) | 18.0 | 9.7 | 8.3 | 6.0 | 30.0 | 17.0 | | 10.0 |
| | BA (mass %) | | | | | | | 17.0 | |
| | IPr (mass %) | | | | | | 13.0 | | |
| Mw | ($\times 10^5$) | 1.67 | 2.11 | 2.13 | 2.09 | 1.65 | 1.79 | 3.16 | 1.47 |
| Storage elastic modulus (E') | (40˚C) ($\times 10^9$) | 1.8 | 2.6 | 2.8 | 2.8 | 0.19 | 0.16 | 1.8 | 2.5 |
| | (0˚C) ($\times 10^9$) | 2.2 | 3.0 | 3.0 | 3.0 | 0.29 | 0.24 | 2.2 | 3.0 |
| Peak temperature of (˚C) loss elastic modulus (E") | (˚C) | -90.70 | 50 | 64 | 80 | -45.105 | -38.105 | 78 | 61 |
| *1: st. Bd, Ba and IPr stand for styrene, butadiene, butyl acrylate and isoprene, respectively. | | | | | | | | | |

[Examples 1-13 of the invention, Comparative Examples 1-13]

Laminated films were manufactured using the resin mixtures shown in Tables 2 and 3 as the intermediate layer and using the resin or resin mixtures shown in Tables 2 and 3 as the outer layers. That is, the materials were melted by respective extruders and the molten materials extruded by T-dies were cooled by casting rolls so that the rates of the respective intermediate layers were as shown in Table 2 to obtain unstretched films having a thickness of 300 μm. The unstretched films were then stretched 1.3 times at 90˚C in the flow direction (MD) and then stretched 5.3 times in the transverse direction (TD) to obtain laminated film having a thickness of about 50 μm. The stretching temperature was set so that the thermal shrinkage rate when immersed in hot water of 80˚C for 10 seconds was about 40%. The properties of the films obtained were determined by the above methods. The results are shown in Tables 2 and 3.

[Table 2]

| | | | Example of the invention | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Laminated film | Intermediate layer | B (parts by mass) | 40 | 50 | 45 | 40 | 55 | 55 | 40 | 55 | 50 | 55 | 55 | 55 | 55 |
| | | E (parts by mass) | | 50 | 55 | 60 | 45 | | 10 | 35 | 15 | 43 | 2 | 45 | 45 |
| | | F (parts by mass) | 60 | | | | | 45 | 50 | 10 | 35 | 2 | 43 | | |
| | | C (parts by mass) | | | | | | | | | | | | | |
| | | D (parts by mass) | | | | | | | | | | | | | |
| | | H (parts by mass) | | | | | | | | | | | | | |
| | Outer layers | A (parts by mass) | 100 | 100 | 100 | 100 | 80 | 80 | 100 | 80 | 80 | 80 | 80 | 80 | 80 |
| | | B (parts by mass) | | | | | | | | | | | | | |
| | | G (parts by mass) | | | | | | | | | | | | | |
| | | E (parts by mass) | | | | | 20 | 20 | | 20 | 20 | 20 | 20 | 20 | 20 |
| | | F (parts by mass) | | | | | | | | | | | | | |
| | | H (parts by mass) | | | | | | | | | | | | | |
| | | C (parts by mass) | | | | | | | | | | | | | |
| | Rate of intermediate layer (%) | | 75 | 75 | 75 | 75 | 75 | 75 | 75 | 75 | 75 | 75 | 75 | 80 | 70 |
| Evaluation | Heat shrinkage rate (%) | | 42.5 | 42.5 | 42.5 | 42.0 | 42.8 | 42.5 | 42.5 | 42.5 | 42.0 | 42.5 | 42.8 | 42.5 | 43.0 |
| | Natural shrinkage rate (%) | | 0.9 | 0.8 | 1.0 | 1.0 | 1.1 | 1.1 | 0.9 | 1.1 | 1.2 | 1.1 | 1.1 | 1.3 | 1.0 |
| | Elasticity (MPa) | | 1234 | 1376 | 1194 | 1144 | 1427 | 1382 | 1265 | 1405 | 1345 | 1420 | 1402 | 1385 | 1485 |
| | Tensile elongation rate (TD) (23°C) (%) | | 125 O | 108 O | 115 O | 130 O | 96 O | 92 O | 123 O | 95 O | 100 O | 95 O | 91 O | 100 O | 88 O |
| | Tensile elongation rate (MD) (0°C) (%) | | 381 O | 267 O | 336 O | 353 O | 352 O | 343 O | 383 O | 345 O | 385 O | 350 O | 344 O | 371 O | 302 O |
| | Shrinkage stress (90°C) (MPa) | | 2.0 O | 2.0 O | 2.0 O | 1.9 O | 2.4 O | 2.3 O | 2.1 O | 2.3 O | 2.2 O | 2.4 O | 2.3 O | 2.4 O | 2.3 O |
| | Shrinkage finish properties | | O | O | O | O | O | O | O | O | O | O | O | O | O |
| | Overall evaluation | | A | A | A | A | A | A | A | A | A | A | A | A | A |

[Table 3]

| | | | Comparative Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Laminated film | Intermediate layer | B (parts by mass) | 55 | 55 | 35 | 55 | | | 60 | 55 | 60 | | | 55 | 55 |
| | | E (parts by mass) | 45 | 45 | 45 | | 45 | 50 | 40 | 45 | 40 | 35 | 50 | 45 | 45 |
| | | F (parts by mass) | | | | 45 | | | | | | | | | |
| | | C (parts by mass) | | | | | 55 | 50 | | | | | | 50 | |
| | | D (parts by mass) | | | 20 | | | | | | | | | | |
| | | H (parts by mass) | | | | | | | | | | 65 | | | |
| | Outer layers | A (parts by mass) | | | | | | | | | | | | 80 | 80 |
| | | B (parts by mass) | | | | | | | 50 | 20 | 60 | | | | |
| | | G (parts by mass) | 50 | 50 | 50 | 50 | 50 | 50 | 10 | 35 | | | | | |
| | | E (parts by mass) | 50 | 50 | 50 | | 50 | 50 | 40 | 45 | 40 | 35 | 20 | 20 | 20 |
| | | F (parts by mass) | | | | 50 | | | | | | | | | |
| | | H (parts by mass) | | | | | | | | | | 65 | | | |
| | | C (parts by mass) | | | | | | | | | | | 80 | | |
| | Rate of intermediate layer (%) | | 80 | 75 | 80 | 80 | 80 | 80 | 75 | 80 | 75 | 80 | 75 | 88 | 50 |
| Evaluation | Heat shrinkage rate (%) | | 41.8 | 41.5 | 41.5 | 43.3 | 42.0 | 41.3 | 41.0 | 40.0 | 41.3 | 42.8 | 41.5 | 43.5 | 44.0 |
| | Natural shrinkage rate (%) | | 1.2 | 1.1 | 1.4 | 1.1 | 1.2 | 1.3 | 1.5 | 1.7 | 1.5 | 0.8 | 1.1 | 1.8 | 0.9 |
| | Elasticity (MPa) | | 1401 | 1399 | 1361 | 1354 | 1474 | 1351 | 1281 | 1377 | 1446 | 1584 | 1500 | 1288 | 1532 |
| | Tensile elongation rate (TD) (23°C) (%) | | 80 ○ | 78 △ | 76 △ | 83 ○ | 71 △ | 73 △ | 68 × | 72 △ | 80 ○ | 81 ○ | 92 ○ | 118 ○ | 68 × |
| | Tensile elongation rate (MD) (0°C) (%) | | 332 ○ | 285 ○ | 390 ○ | 345 ○ | 309 ○ | 273 ○ | 277 ○ | 303 ○ | 256 ○ | 178 ○ | 140 ○ | 382 ○ | 135 △ |
| | Shrinkage stress (90°C) (MPa) | | 2.7 △ | 2.5 ○ | 3.2 × | 2.8 △ | 3.2 × | 3.2 × | 2.9 △ | 2.7 △ | 2.7 △ | 2.5 ○ | 2.6 △ | 2.7 △ | 2.1 ○ |
| | Shrinkage finish properties | | △ | △ | × | △ | × | × | × | △ | △ | △ | △ | △ | ○ |
| | Overall evaluation | | B | B | C | B | C | C | C | B | B | B | B | B | C |

[Example 14]

The films of Example 3 and 5 to 9 of the invention were cut to strips with a width of 15 mm and a length of 200 mm. Five strips were cut from each of the films of Examples 3 and 5 to 9, and are compared with other strips for solvent cracks. One end of each specimen (strip) was fixed and an 800 gram weight was hung from the other end. To each specimen, 3 μl of a mixture of solvents comprising isopropyl alcohol and ethyl acetate at a mass ratio of 8/2 was dripped using a microsyringe, and a minute later, the strips were visually checked for cracks.
Cracks were observed on two of the five strips cut from each of the films of Examples 3 and 7 of the invention. But cracks were found in none of the strips cut from the films of Examples 5, 6, 8 and 9.

[Results]

From Tables 2 and 3, it is clear that due to the fact that resins that meet the requirements of the present invention were used as the intermediate layer and the outer layers, the films were excellent in low-temperature shrinkability, resistance to natural shrinkage, elasticity, and printing adaptability, and constant elongation rates were imparted to the films in the main shrinkage direction and transverse direction in a balanced manner. On the other hand, it is clear that if the intermediate layer or the outer layers do not meet the requirements of this invention, the films have problems in some property in an unbalanced manner.

Further, from Examples 5, 6, 8 and 9 of the invention, it is clear that if the outer layers contain component (b2), not only the properties will be satisfactory, but solution cracks can be suppressed and the resistance to solvents improves, that is, the film after printing exhibits better elongation.

**Claims**

1. A multilayer heat shrinkable polystyrene film which is a laminated film having at least three layers including outer layers made of the below component (a), and an intermediate layer made of a mixture containing at least the below component (b1) and containing the below component (b2) and/or component (c),
   the laminated film being at least monoaxially stretched, the ratio of the thickness of the intermediate layer to the total thickness of the laminated film being at least 60% and at most 85%, and the maximum value of shrinkage stress at 90˚C in a main shrinkage direction being at most 2.4 MPa:

   (a) styrene-butadiene block copolymer having a styrene content of at least 75 mass % and having two peaks of loss elastic modulus (E");
   (b1) styrene-butadiene block copolymer having a styrene content of at least 85 mass % and having one peak of loss elastic modulus (E");
   (b2) styrene-butadiene block copolymer having a butadiene content of more than 25 mass %; and
   (c) styrene-butadiene-isoprene block copolymer.

2. A multilayer heat shrinkable polystyrene film which is a laminated film having at least three layers including outer layers made of a mixture of the below components (a) and (b2), and an intermediate layer made of a mixture containing at least the below component (b1) and containing the below component (b2) and/or component (c),
   the laminated film being at least monoaxially stretched, the ratio of the thickness of the intermediate layer to the total thickness of the laminated film being at least 60% and at most 85%, and the maximum value of shrinkage stress at 90˚C in a main shrinkage direction being at most 2.5 MPa:

   (a) styrene-butadiene block copolymer having a styrene content of at least 75 mass % and having two peaks of loss elastic modulus (E");
   (b1) styrene-butadiene block copolymer having a styrene content of at least 85 mass % and having one peak of loss elastic modulus (E");
   (b2) styrene-butadiene block copolymer having a butadiene content of more than 25 mass %; and
   (d) Styrene-butadiene-isoprene block copolymer.

3. The multilayer heat shrinkable polystyrene film of claim 2 wherein the mass ratio (a)/(b2) between components (a) and (b2) in the mixture forming the outer layers is 70-90/ 30-10.

4. The multilayer heat shrinkable polystyrene film of any of claims 1 to 3 wherein the mass ratio (b1)/(b2) between components (b1) and (b2) in the mixture forming the intermediate layer is 30-80/70-20, or the mass ratio (b1)/(c) between components (b1) and (c) is 30-80/70-20.

5. The multilayer heat shrinkable polystyrene film of any of claims 1 to 4 wherein component (a) is a copolymer which has a styrene content of at least 75 mass %, and a storage elastic modulus (E') at 40˚C of at least $1.00 \times 10^9$ Pa and at most $2.30 \times 10^9$ Pa, and in which one peak of loss elastic modulus (E") exists in the range of 55˚C to 80˚C and another peak of loss elastic modulus (E") exists in the range of -100˚C to -30˚C.

6. The multilayer heat shrinkable polystyrene film of any of claims 1 to 5 wherein component (b1) is a styrene-butadiene block copolymer which has a storage elastic modulus (E') at 0˚C of at least $2.00 \times 10^9$ Pa and a storage elastic modulus (E') at 40˚C of at least $1.50 \times 10^9$ Pa, and has one peak of loss elastic modulus (E") existing in the range of 40˚C to 60˚C.

7. The multilayer heat shrinkable polystyrene film of any of claims 1 to 6 wherein component (b2) is a styrene-butadiene block copolymer which has a storage elastic modulus (E') at 0˚C of at most $1.00 \times 10^9$ Pa, and has at least one peak of loss elastic modulus (E") existing in the range of -100˚C to -30˚C.

8. The multilayer heat shrinkable polystyrene film of any of claims 1 to 7 wherein component (c) is a styrene-butadiene-isoprene copolymer which has a butadiene content of at least 10 mass % and an isoprene content of at least 8 mass %, has a storage elastic modulus (E') at 0°C of at most 1.00 x10$^9$ Pa, and has at least one peak of loss elastic modulus (E") existing in the range of -100°C to -30°C.

9. The multilayer heat shrinkable polystyrene film of any of claims 1 to 6 wherein component (b2) is a styrene-butadiene block copolymer which has a storage elastic modulus (E') at 0°C of at most 1.00 x10$^9$ Pa and at least one peak of loss elastic modulus (E") existing in the range of -100°C to -30°C, and component (c) is a styrene-butadiene-isoprene copolymer which has a butadiene content of at least 10 mass % and an isoprene content of at least 8 mass %, and a storage elastic modulus (E') at 0°C of at most 1.00 x10$^9$ Pa, and at least one peak of loss elastic modulus (E") existing in the range of -100°C to -30°C, and wherein the intermediate layer is made of a mixture of components (b1), (b2) and (c).

10. The multilayer heat shrinkable polystyrene film of claim 9 wherein the mass ratio (b1)/{(b2) + (c)}, i.e. the mass ratio of component (b1) to components (b2) and (c) is 30-80/70-20.

11. The multilayer heat shrinkable polystyrene film of any of claims 1 to 7 wherein the intermediate layer is made of a mixture of components (b1) and (b2).

12. The multilayer heat shrinkable polystyrene film of any of claims 1 to 11 wherein the heat shrinkage rate in the main shrinkage direction when immersed in hot water at 80°C for 10 seconds is at least 30%.

13. A heat shrinkable label formed of the multilayer heat shrinkable polystyrene film of any of claims 1 to 12.

14. A container formed of the heat shrinkable label of claim 13.

<div align="center">

**INTERNATIONAL SEARCH REPORT**

</div>

| | International application No. |
|---|---|
| | PCT/JP2005/014411 |

| A. CLASSIFICATION OF SUBJECT MATTER |
|---|
| *B32B27/30* (2006.01), *B32B7/02* (2006.01), *B65D23/00* (2006.01), *B65D25/36* (2006.01), *B65D65/40* (2006.01), *G09F3/04* (2006.01) |

According to International Patent Classification (IPC) or to both national classification and IPC

| B. FIELDS SEARCHED |
|---|
| Minimum documentation searched (classification system followed by classification symbols) |
| *B32B1/00-35/00* (2006.01), *B65D23/00* (2006.01), *B65D25/36* (2006.01), *B65D65/40* (2006.01), *G09F3/04* (2006.01) |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| A | JP 2004-74687 A  (Mitsubishi Plastics, Inc.), 11 March, 2004 (11.03.04), Full text (Family: none) | 1-14 |
| A | JP 11-138708 A  (Mitsubishi Plastics, Inc.), 25 May, 1999 (25.05.99), Full text (Family: none) | 1-14 |
| A | JP 2000-233444 A  (Gunze Ltd.), 29 August, 2000 (29.08.00), Full text (Family: none) | 1-14 |

[X] Further documents are listed in the continuation of Box C.    [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 October, 2005 (31.10.05) | 15 November, 2005 (15.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/014411 |

C (Continuation).　　DOCUMENTS CONSIDERED TO BE RELEVANT

| Category* | Citation of document, with indication, where appropriate, of the relevant passages | Relevant to claim No. |
| --- | --- | --- |
| A | JP 10-333577 A (Fuji Seal, Inc.), 18 December, 1998 (18.12.98), Full text (Family: none) | 1-14 |

Form PCT/ISA/210 (continuation of second sheet) (April 2005)

**EP 1 785 271 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61041544 A
- JP 9272182 A
- JP 2000185373 A
- JP 2000094598 A
- JP 2000238192 A